# EUROPÄISCHE PATENTSCHRIFT

(11) **EP 1 870 202 B1**
(45) Veröffentlichungstag und Bekanntmachung des Hinweises auf die Patenterteilung: **11.03.2009**
(21) Anmeldenummer: 07011697.5
(22) Anmeldetag: 14.06.2007
(51) Int. Cl.: B23Q 5/34

(54) **Werkzeugmaschine**
Machine tool
Machine-outil

(30) Priorität: 23.06.2006 DE 102006028929; 31.05.2007 DE 102007025321
(43) Veröffentlichungstag der Anmeldung: 26.12.2007
(73) Patentinhaber: THE GLEASON WORKS, Rochester, New York 14607-1282 (US)
(72) Erfinder: Mall, Johann, 82256 Fürstenfeldbruck (DE); Kadlubski, Stephan, 82234 Wessling (DE)
(74) Vertreter: Leinweber & Zimmermann

(56) Entgegenhaltungen:
- DE-A1- 2 714 402
- DE-A1- 19 649 322

## Beschreibung

Die Erfindung bezieht sich auf eine Werkzeugmaschine mit einer Maschinenbasis, einer ersten und einer zweiten Bewegungsachse, einer ersten Funktionsträgereinheit, die von einer von einem gesteuerten Antriebsmotor angetriebenen ersten Bewegungseinheit gemäß einem der ersten Bewegungsachse entsprechenden ersten Bewegungsweg relativ zur Maschinenbasis bewegbar ist, und einer zweiten Funktionsträgereinheit, die von einer zweiten Bewegungseinheit gemäß einem der zweiten Bewegungsachse entsprechenden zweiten Bewegungsweg bewegbar ist, wobei die erste Bewegungsachse eine Linearbewegungsachse ist und die zweite Bewegungseinheit eine zwischen einem Verbindungszustand und einem Trennzustand schaltbare erste Kupplungseinheit, einen im Verbindungszustand der ersten Kupplungseinheit durch die Bewegung der ersten Funktionsträgereinheit längs eines deren erstem Bewegungsweg entsprechenden Bewegungswegs antreibbaren Antriebsabschnitt und einen von dem Antriebsabschnitt angetriebenen Abtriebsabschnitt aufweist, durch den die zweite Funktionsträgereinheit längs ihres zweiten Bewegungsweges angetrieben ist.

An den Funktionsträgereinheiten derartiger Werkzeugmaschinen sind insbesondere Werkstücke, beispielsweise Zahnradrohlinge oder roh bearbeitete Zahnräder, und Bearbeitungswerkzeuge, beispielsweise Fräser oder Schleifschnecken, aufgespannt. Durch die Bewegungen dieser Funktionsträgereinheiten gemäß ihren Bewegungsachsen wird der für die Bearbeitung erwünschte Eingriff zwischen dem Werkzeug und dem Werkstück hergestellt. Die Bewegungseinheiten, welche die Funktionsträgereinheiten gemäß deren Bewegungsachsen antreiben, sind normalerweise für jede Bewegungsachse mit einem eigenen gesteuerten Antriebsmotor versehen. Durch die aus der Steuerung dieser Antriebsmotore resultierenden Bewegungswege der Funktionsträgereinheiten wird die für den Bearbeitungsvorgang erwünschte Relativbewegung zwischen Werkzeug und Werkstück mit der erforderlichen hohen Genauigkeit eingestellt. Eine andere Funktionsträgereinheit kann beispielsweise als Träger für eine Düse dienen, mit der der Bearbeitungszone ein Kühlmittel zugeführt wird. Durch die Bewegbarkeit dieser Funktionsträgereinheit kann der Abstand zu dem Bearbeitungswerkzeug oder dem Werkstück in gewünschter Weise eingestellt werden. Die Ausstattung jeder Bewegungsachse mit einem ihr eigenen gesteuerten Antriebsmotor bedeutet allerdings einen hohen baulichen Aufwand.

Bei einer bekannten Drehmaschine der eingangs genannten Art (DE 196 49 322 A1) bildet ein durch eine Spindel längs Führungsbahnen numerisch gesteuert verfahrbarer Werkzeugschlitten die erste Funktionsträgereinheit. Als zweite Funktionsträgereinheiten sind zwei Nebenaggregate vorgesehen, die hintereinander auf zu den Führungsbahnen des Werkzeugschlittens parallelen Führungsbahnen verfahrbar sind. An der den Nebenaggregaten zugewandten Seite des Werkzeugschlittens sind zwei Aufnahmebohrungen vorgesehen, in die Mitnehmerbolzen einrasten können, welche an den Nebenaggregaten angeordnet sind und durch Kolbenantriebe in ihre Raststellung ausgeschoben werden können. Bei dieser Anordnung kann die Kupplung zwischen dem Werkzeugschlitten 8 und dem betreffenden Nebenaggregat nur dann erfolgen, wenn ersterer in eine Stellung verfahren wird, in der eine seiner Aufnahmebohrungen mit dem Mitnehmerbolzen des letzteren axial fluchtet. Zusätzlich ist für die Nebenaggregate ein Zylinderantrieb vorgesehen, mit dessen Kolbenstange sie durch Kupplungen verbunden und dadurch von letzterer längs ihrer Führungsbahnen verschoben werden können.

Demgegenüber liegt der Erfindung die Aufgabe zugrunde, eine Werkzeugmaschine der eingangs genannten Art zu schaffen, die bei gleichbleibender Funktionalität einen geringeren baulichen Aufwand erfordert.

Erfindungsgemäß wird diese Aufgabe dadurch gelöst, daß der Antriebsabschnitt und der Abtriebsabschnitt der zweiten Bewegungseinrichtung axial voneinander beabstandete Abschnitte eines sich mit seiner Längsachse parallel zur Linearbewegungsachse erstreckenden starren Stabes sind.

Die Erfindung setzt bei der Erwägung an, daß Bewegungsachsen, sofern sie nicht völlig unabhängigen Freiheitsgraden entsprechen, nicht notwendigerweise Einzelantriebe mit individuellen Antriebsmotoren zugeordnet sein müssen. Vielmehr wird erfindungsgemäß auf einen eigenen Antriebsmotor für die zweite Funktionsträgereinheit verzichtet und deren Bewegungsenergie von der Bewegung der von ihrem gesteuerten Antriebsmotor angetriebenen ersten Funktionsträgereinheit abgeleitet. Dabei bildet im Verbindungszustand der ersten Kupplungseinheit die zweite Bewegungseinheit an ihrem Abtriebsabschnitt die in ihren Antriebsabschnitt eingeleitete Bewegung der ersten Funktionsträgereinheit auf die zweite Funktionsträgereinheit ab. Wenn dagegen die erste Kupplungseinheit in ihren Trennzustand geschaltet wird, verharrt die zweite Funktionsträgereinheit in der Stellung, die dem von ihr bis dahin zurückgelegten zweiten Bewegungsweg entspricht. Dadurch wird die erfindungsgemäße Ausgestaltung zahlreichen Anforderungen in Werkzeugmaschinen gerecht, wenn es nicht erforderlich ist, die zweite Funktionsträgereinheit zu jedem Zeitpunkt unabhängig von der ersten Funktionsträgereinheit zu bewegen. In der erfindungsgemäß ausgestalteten Werkzeugmaschine kann beispielsweise der zweite Bewegungsweg der zweiten Funktionsträgereinheit dem ersten Bewegungsweg der ersten Funktionsträgereinheit gerade entgegengesetzt sein, so daß die zweite Funktionsträgereinheit, sofern sie an der ersten Funktionsträgereinheit angeordnet ist, gegenüber der Maschinenbasis in Ruhe gehalten wird. Andererseits können zwischen der ersten Funktionsträgereinheit und der an ihr angeordneten zweiten Funktionsträgereinheit durch geeignetes Schalten der ersten Kupplungseinheit temporär Relativbewegungen und dadurch gegenseitige Positionsänderungen herbeigeführt werden.

Der Erfindungsgedanke sieht insbesondere vor, daß die erste Bewegungsachse eine Linearbewegungsachse ist. Dann folgt im Verbindungszustand der ersten Kupplungseinheit der Antriebsabschnitt der zweiten Bewegungseinheit dem linearen Bewegungsweg der ersten Funktionsträgereinheit. Dabei sind der Antriebsabschnitt und der Abtriebsabschnitt der zweiten Bewegungseinrichtung axial voneinander beabstandete Abschnitte eines sich mit seiner Längsachse parallel zur Linearbewegungsachse erstreckenden starren Stabes. Dieser Stab wird im Verbindungszustand der ersten Kupplungseinheit je nach der Richtung der Bewegung der ersten Funktionsträgereinheit von letzterer mitgeschoben oder mitgezogen und stellt infolge dieses Bewegungsweges die zum Antrieb der zweiten Funktionsträgereinheit erforderliche Bewegungsenergie zur Verfügung.

Eine weitere vorteilhafte Ausführungsform besteht darin, daß die zweite Bewegungseinheit eine zweite Kupplungseinheit aufweist, die gegenläufig zu der ersten Kupplungseinheit zwischen einem Verbindungszustand, in dem die zweite Bewegungseinheit gesperrt ist, und einem Trennzustand, in dem die zweite Bewegungseinheit zum Antrieb freigegeben ist, schaltbar ist. Die zweite Kupplungseinheit verriegelt somit die zweite Funktionsträgereinheit in der Position, die ihrem bis zur Trennung der ersten Kupplungseinheit zurückgelegten zweiten Bewegungsweg entspricht. Dadurch wird sichergestellt, daß diese Position auch beim Angriff von Störkräften beibehalten wird, bis nach Trennung der zweiten Kupplungseinheit und Übergang der ersten Kupplungseinheit in ihren Verbindungszustand die von der ersten Funktionsträgereinheit abgeleitete Antriebsenergie erneut auf die zweite Funktionsträgereinheit einwirkt.

Zweckmäßigerweise ist vorgesehen, daß die erste Kupplungseinheit ein Klemmelement aufweist, an dem der den Antriebsabschnitt bildende Abschnitt des Stabes im Verbindungszustand der ersten Kupplungseinheit festklemmbar ist. Diese Ausführung der ersten Kupplungseinheit zeichnet sich durch hohe Betriebssicherheit und bauliche Einfachheit aus. Entsprechende Vorteile können dadurch erhalten werden, daß die zweite Kupplungseinheit ein Klemmelement aufweist, an dem der den Abtriebsabschnitt bildende Abschnitt des Stabes im Verbindungszustand der zweiten Kupplungseinheit festklemmbar ist.

Gemäß einem anderen Gedanken der Erfindung ist vorgesehen, daß der Antriebsabschnitt und der Abtriebsabschnitt der zweiten Bewegungseinrichtung durch je eine druckmittelbetätigte Kolben-Zylinder-Einheit gebildet sind, aus deren Zylinder jeweils eine mit dem Kolben verbundene Kolbenstange herausragt und deren von dem jeweiligen Kolben in dem jeweiligen Zylinder voneinander getrennte Kammern jeweils durch sich zwischen den beiden Kolben-Zylinder-Einheiten erstreckende Druckmittelleitungen miteinander verbunden sind, und daß sich die Kolbenstange der den Antriebsabschnitt bildenden Kolben-Zylinder-Einheit parallel zur Linearbewegungsachse erstreckt.

Da hierbei die einander entsprechenden Kammern der Zylinder durch die Druckmittelleitungen miteinander verbunden sind, führt eine in die Kolbenstange der einen Kolben-Zylinder-Einheit eingeleitete Bewegung dazu, daß infolge der dadurch bewirkten Verdrängungen des Druckmittels der Kolben der jeweils anderen Kolben-Zylinder-Einheit und damit dessen Kolbenstange eine entsprechende Bewegung ausführt. Wenn die beiden Zylinder den gleichen Innenquerschnitt aufweisen, sind dabei die Bewegungswege der beiden Kolbenstangen gleich groß.

Eine Möglichkeit der Einleitung der Bewegungsenergie in die zweite Bewegungseinheit besteht darin, daß die den Antriebsabschnitt bildende Kolben-Zylinder-Einheit an der ersten Funktionsträgereinheit und die erste Kupplungseinheit an der Maschinenbasis festgelegt ist. Alternativ kann aber auch vorgesehen sein, daß die den Antriebsabschnitt bildende Kolben-Zylinder-Einheit an der Maschinenbasis und die erste Kupplungseinheit an der ersten Funktionsträgereinheit festgelegt ist.

Wie schon bei den Ausführungsformen, deren zweite Bewegungseinheit den Stab aufweist, ist es auch bei den die Kolben-Zylinder-Einheiten aufweisenden Ausführungsformen zweckmäßig, daß die erste Kupplungseinheit ein Klemmelement aufweist, an dem die Kolbenstange der den Antriebsabschnitt bildenden Kolben-Zylinder-Einheit im Verbindungszustand der ersten Kupplungseinheit festklemmbar ist, und/oder daß die zweite Kupplungseinheit ein Klemmelement aufweist, an dem die Kolbenstange der den Abtriebsbildenden Kolben-Zylinder-Einheit im Verbindungszustand der zweiten Kupplungseinheit festklemmbar ist.

Die Erfindung ist insbesondere für den Fall anwendbar, daß die zweite Bewegungsachse eine Linearbewegungsachse ist.

Auch kann vorgesehen sein, daß zwischen der zweiten Funktionsträgereinheit und dem Abtriebsabschnitt ein dessen Bewegungsrichtung oder dessen Bewegungsweg änderndes Getriebe vorgesehen ist.

Ein wichtiges Anwendungsbeispiel besteht darin, daß an der ersten Funktionsträgereinheit ein Bearbeitungswerkzeug und an der zweiten Funktionsträgereinheit eine Kühlmitteldüse angeordnet ist. Durch die aus der Bewegung der ersten Funktionsträgereinheit ableitbaren Bewegung der zweiten Funktionsträgereinheit läßt sich sodann der Abstand der Kühlmitteldüse zum Bearbeitungswerkzeug optimal einstellen. Dies ist insbesondere für den Fall von Bedeutung, daß das Bearbeitungswerkzeug, beispielsweise eine Schleifschnecke, im Verlauf seiner Betriebsdauer durch Abnutzung und anschließendes Abrichten in seiner Radialabmessung immer kleiner wird und daher der Abstand der Kühlmitteldüse entsprechend nachgeführt werden muß.

Viele Anwendungen zeichnen sich dadurch aus, daß die erste und die zweite Funktionsträgereinheit je ein verschiebbar gelagerter erster und zweiter Schlitten sind. In diesen Fällen kann insbesondere auch vorgesehen sein, daß der erste Schlitten auf der Maschinenbasis verschiebbar gelagert und/oder der zweite Schlitten auf dem ersten Schlitten verschiebbar gelagert ist.

Beispielsweise kann dann der erste Schlitten ein Werkzeugträgerschlitten sein und der zweite Schlitten zur Halterung einer Kühlmitteldüse dienen. Durch den Einsatz der die beiden Kolben-Zylinder-Einheiten aufweisenden zweiten Bewegungseinheit kann sodann erreicht werden, daß die Bewegungshübe der beiden Schlitten entgegengesetzt gleich groß sind, so daß der die Kühlmitteldüse tragende zweite Schlitten relativ zur Maschinenbasis trotz der Arbeitsbewegungen des ersten Schlittens still steht und damit zu einem auf der Maschinenbasis stationären Werkstückträger ortsfest bleibt.

Durch die zueinander gegenläufig schaltbaren Kupplungseinheiten ist es auch möglich, die Stellung des zweiten Schlittens relativ zur Maschinenbasis im Bedarfsfall zu verändern. Zu diesem Zweck kann die Kolbenstange der den Antriebsabschnitt bildenden Kolben-Zylinder-Einheit durch die zweite Kupplungseinrichtung verklemmt werden, während die erste Kupplungseinheit, welche die Klemmung dieser Kolbenstange mit der Maschinenbasis bzw. mit dem Werkzeugträgerschlitten bewirkt, in ihren Trennzustand geschaltet und dadurch ihre Klemmung gelöst wird. In diesem Betätigungszustand der beiden Klemmeinrichtungen wird der zweite Schlitten gemeinsam mit dem Werkzeugträgerschlitten bewegt. Dabei kann die sehr genau arbeitende erste Bewegungseinrichtung des Werkzeugträgerschlittens zur Positionierung des zweiten Schlittens benutzt werden. Wenn der zweite Schlitten die vorgegebene Stellung relativ zum ortsfesten Werkstückträger bzw. dem darauf angeordneten Werkstück erreicht hat, wird der Schaltzustand der beiden Kupplungen gewechselt, so daß der zweite Schlitten unabhängig von der Bewegung des Werkzeugträgerschlittens gegenüber dem Werkstückträger ortsfest bleibt.

Im folgenden wird die Erfindung anhand von Ausführungsbeispielen unter Bezugnahme auf die Zeichnung näher erläutert. Es zeigt:
- Fig. 1: eine perspektivische Ansicht einer ersten Ausführungsform mit einer ersten und einer zweiten Funktionsträgereinheit,
- Fig. 1a: eine teilweise geschnittene, vertikale Aufsicht auf die zweite Funktionsträgereinheit und deren Bewegungseinheit,
- Fig. 1b: eine Fig. 1 a entsprechende Darstellung in einer durch die Bewegungseinheit gelegten Schnittebene,
- Fig. 2: eine Schnittansicht einer zweiten Ausführungsform, und
- Fig. 3: eine Schnittansicht einer gegenüber Fig. 2 abgewandelten Ausführungsform.

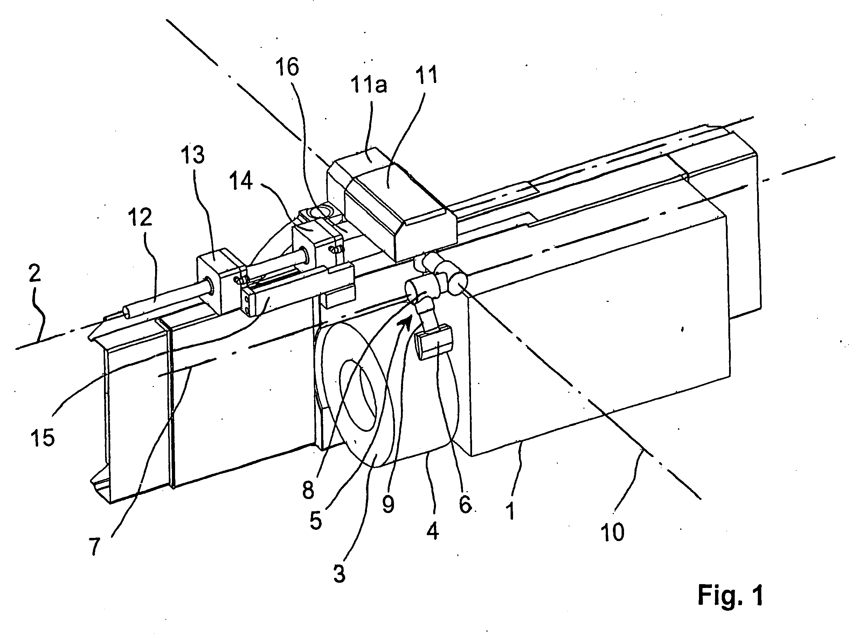

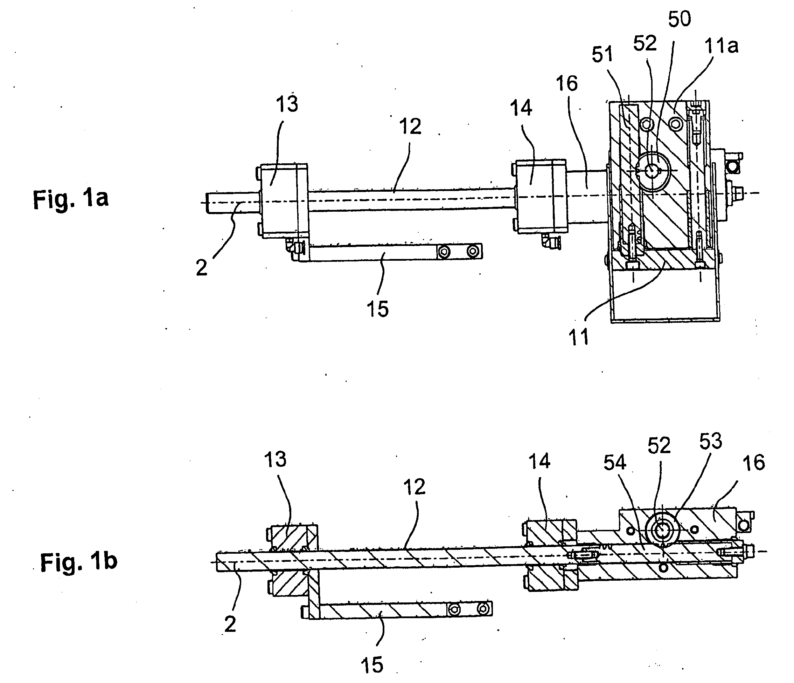

In der ausschnittsweisen Darstellung einer Werkzeugmaschine, die in Fig. 1 perspektivisch gezeigt ist, ist eine erste Funktionsträgereinheit in Form eines ersten Schlittens 1 in Bezug auf eine in Fig. 1 nicht dargestellte Maschinenbasis längs einer linearen, ersten Bewegungsachse bewegbar gelagert, welche sich parallel zu einer in Fig. 1 eingezeichneten Achse 2 erstreckt. Die Bewegung des Schlittens 1 längs dieser ersten Bewegungsachse wird von einer in Fig. 1 nicht näher dargestellten ersten Bewegungseinheit bewirkt, die von einem ebenfalls nicht dargestellten gesteuerten Antriebsmotor in Form eines Servomotors angetrieben wird. An dem ersten Schlitten 1 ist ein rotierend angetriebenes Bearbeitungswerkzeug 3, beispielsweise in Form einer Zahnradschleifschnecke, gelagert, dessen Rotationsachse sich parallel zur Achse 2 erstreckt.

Weiterhin weist die Werkzeugmaschine gemäß Fig. 1 eine zweite Funktionsträgereinheit in Form eines zweiten Schlittens 11 auf, der in Bezug auf die Maschinenbasis längs einer linearen, zweiten Bewegungsachse bewegbar gelagert ist, welche sich parallel zu einer zur Achse 2 orthogonalen Achse 10 erstreckt.

Aus den Fig. 1 a und 1b, zu deren Zeichnungsebenen die Achsen 2 und 10 parallel verlaufen, ist in Verbindung mit Fig. 1 weiterhin ersichtlich, daß die Bewegung des Schlittens 11 längs seiner zur Achse 10 parallelen Linearbewegungsachse durch ein Ritzel 50 angetrieben wird, das mit einer an dem Schlitten 11 angeordneten Zahnstange 51 kämmt. Dieses Ritzel 50 sitzt drehfest auf dem in Bezug auf Fig. 1 oberen Ende einer Welle 52, die in einem in Bezug auf die Maschinenbasis stationären Lagerblock 11a drehbar gelagert ist. Auf dem dem Ritzel 50 entgegengesetzten unteren Ende der Welle 52 sitzt drehfest ein unteres Ritzel 53 welches mit einem Zahnstangenbereich 54 eines starren Stabes 12 kämmt, welcher sich längs der zur Linearbewegungsachse des ersten Schlittens 1 parallelen Achse 2 erstreckt.

Der starre Stab 12 bildet zusammen mit einer ersten Kupplungseinheit 13, einer zweiten Kupplungseinheit 14, der Welle 52, den Ritzeln 50, 53 und der Zahnstange 51 eine zweite Bewegungseinheit für die zweite Funktionsträgereinheit 11. Die beiden Kupplungseinheiten 13, 14 weisen je ein um die Achse 2 zentriertes, schaltbares Klemmelement auf, durch das sich der starre Stab 12 hindurch erstreckt. Wenn das betreffende Klemmelement in seinen Verbindungszustand geschaltet wird, wird der Stab 12 an der betreffenden Kupplungseinheit 13, 14 axial unverschieblich festgelegt. Wird das betreffende Verbindungselement in seinen Trennzustand geschaltet, ist der Stab 12 gegenüber der betreffenden Kupplungseinheit 13, 14 axial frei verschieblich.

Die erste Kupplungseinheit 13 ist durch ein Verbindungsteil 15 starr mit dem ersten Schlitten 1 verbunden. Die zweite Kupplungseinheit 14 ist mit einem Gehäuse 16 starr verbunden, das seinerseits mit dem Lagerblock 11a starr verbunden ist und in dem sich der Bereich des starren Stabes 12 erstreckt, der zahnstangenartig mit dem unteren Ritzel 53 der sich von der in Fig. 1b dargestellten unteren Ebene zu der in Fig. 1 a dargestellten oberen Ebene hin erstreckenden Welle 52 kämmt.

Wenn die erste Kupplungseinheit 13 in ihren Verbindungszustand geschaltet wird, folgt daher der Stab 12 der Linearbewegung des ersten Schlittens 1 und treibt durch seinen Zahnstangenabschnitt die Welle 52 drehend an, wodurch der die zweite Funktionsträgereinheit bildende zweite Schlitten 11 einen entsprechenden Linearbewegungsweg längs der Achse 10 erfährt. Auf diese Weise bildet der im Bereich der ersten Kupplungseinheit 13 verlaufende Abschnitt des Stabes 12 den Antriebsabschnitt und der im Bereich des Gehäuses 16 verlaufende Abschnitt des Stabes 12 den Abtriebsabschnitt der zweiten Bewegungseinrichtung der zweiten Funktionsträgereinheit.

Die zweite Kupplungseinheit 14 ist gegenläufig zur ersten Kupplungseinheit 13 geschaltet. Demzufolge befindet sich die zweite Kupplungseinheit 14 im Trennzustand, wenn die erste Kupplungseinheit 13 in den Verbindungszustand geschaltet ist und dadurch die Mitnahme zwischen der Bewegung der ersten Funktionsträgereinheit und dem Stab 12 bewirkt. Wenn die zweite Funktionsträgereinheit infolge dieser Mitnahme in ihre gewünschte Position eingestellt worden ist, wird die erste Kupplungseinheit 13 in ihren Trennzustand geschaltet. Die zweite Kupplungseinheit 14 geht dazu gegenläufig in ihren Verbindungszustand über, wodurch der Stab 12 in Bezug auf das Gehäuse 16 unverrückbar festgelegt wird. Dadurch wird die zweite Funktionsträgereinheit 11 in ihrer eingestellten Position festgelegt.

An der zweiten Bewegungseinheit, insbesondere an dem starren Stab 12, kann ein Referenzpunkt vorgesehen sein, der bei seinem Vorbeilauf an einem Referenzpunktsensor von letzterem erkannt wird. Durch das Erkennungssignal des Referenzpunktsensors erhält eine elektronische Steuerung die zur Berechnung der jeweiligen Momentanstellung der zweiten Funktionsträgereinheit 11 ausreichende Information. Auf diese Weise kann eine Anzeige der Momentanstellung oder auch eine automatische Einstellung der Position der zweiten Funktionsträgereinheit 11 implementiert werden.

Die Umschaltung der Kupplungseinheiten 13, 14 zwischen ihrem Verbindungszustand und ihrem Trennzustand kann beispielsweise durch hydraulische, pneumatische oder elektromotorische Betätigung unter der Steuerung einer geeigneten Steuereinheit erfolgen.

An dem die zweite Funktionsträgereinheit bildenden zweiten Schlitten 11 ist mittels eines Befestigungsabschnittes 5 eine Kühlmitteldüse 6 angeordnet, durch die auf die Mantelfläche 4 des Bearbeitungswerkzeugs 3 ein Strahl flüssigen Kühlmittels gerichtet werden kann. Durch den sich parallel zur Achse 10 erstreckenden Linearbewegungsweg des zweiten Schlittens 11 ist somit der radiale Abstand zwischen der Kühlmitteldüse 6 und der Mantelfläche 4 des Bearbeitungswerkzeugs 3 einstellbar.

Alternativ könnte diese Einstellung auch dadurch erfolgen, daß ein sich längs einer zur Achse 2 parallelen Achse 7 erstreckendes Teil 8 des Befestigungsabschnitts 5 um diese Achse drehbar ausgebildet wird. Durch den dann möglichen Drehbewegungsweg des Teils 8 um die Achse 7 herum ist sodann die Winkelstellung der an einem von dem Teil 8 radial abstehenden Tragarm 9 angeordneten Kühlmitteldüse 6 einstellbar. Dadurch ist insbesondere die Richtung, in der der Kühlmittelstrom auf die Mantelfläche 4 des Bearbeitungswerkzeugs 13 auftrifft, einstellbar.

Zum Antrieb des Teils 8 längs ihrer Drehbewegung kann beispielsweise vorgesehen sein, daß das Teil 8 drehfest mit dem einen Ende einer sich längs der Achse 7 erstreckenden Welle verbunden ist, deren anderes Ende ein Kegelrad trägt, welches mit einem Kegelrad kämmt, das drehfest auf einer sich längs der zur Achse 7 orthogonalen Achse 10 erstreckenden Welle angeordnet ist. Diese Welle kann in einem in Bezug auf die Maschinenbasis stationären Bauteil, welches beispielsweise dem Lagerblock 11a entspricht, drehbar gelagert sein und dort ein auf der Welle drehfestes Ritzel aufweisen, das mit dem Zahnstangenbereich des starren Stabes 12 kämmt. Wenn dann die erste Kupplungseinheit 13 in ihren Verbindungszustand geschaltet wird und dadurch der Stab 12 der Linearbewegung des ersten Schlittens 1 folgt, treibt er durch seinen Zahnstangenabschnitt die sich längs der Achse 10 erstreckende Welle drehend an, wodurch das Teil 8 einen entsprechenden Drehbewegungsweg um die Achse 7 herum erfährt.

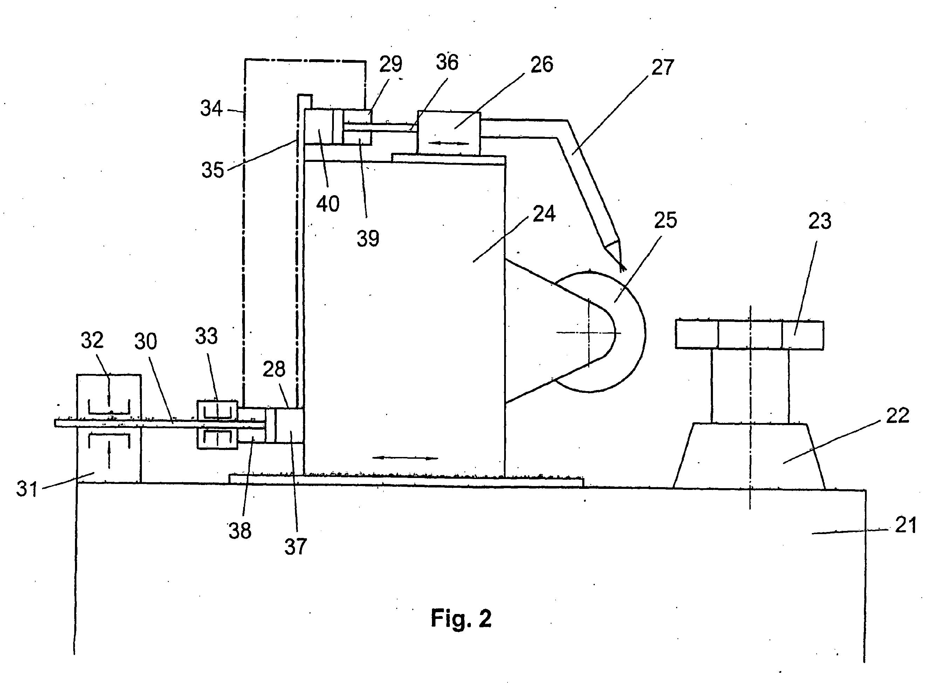

Bei der in Fig. 2 in schematischer Seitenansicht gezeigten Werkzeugmaschine ist auf der Maschinenbasis 21 ein Werkstückträger 22 befestigt, auf dem ein Werkstück 23, beispielsweise ein Zahnrad, angeordnet ist. Auf der Basis 21 ist ferner ein Werkzeugträgerschlitten 24 als erste Funktionsträgereinheit gegenüber dem Werkstückträger 22 abstandsveränderlich angeordnet. Die dem Werkzeugträgerschlitten 24 zugeordnete erste Bewegungseinheit ist in Fig. 2 nicht dargestellt. Der Werkzeugträgerschlitten 24 trägt ein Werkzeug 25, beispielsweise eine Schleifscheibe, ein Schabrad oder dergleichen. Als zweite Funktionsträgereinheit ist ein Funktionsträgerschlitten 26 auf dem Werkzeugträgerschlitten 24 parallel zu dessen die erste Bewegungsachse darstellenden Verschieberichtung verschiebbar gelagert. Der Funktionsträgerschlitten 26 trägt eine Funktionseinheit 27, beispielsweise eine Kühlmitteldüse.

Bei dieser Ausführungsform soll die Funktionseinheit 27 unabhängig von den Bewegungen des Werkzeugträgerschlittens 24 zu dem Werkstück 23 eine bestimmte Relativstellung einnehmen. Zu diesem Zweck ist als zweite Bewegungseinheit eine hydraulische Kopplung zwischen dem Werkzeugträgerschlitten 24 und dem Funktionsträgerschlitten 26 vorgesehen. Diese hydraulische Kopplung umfaßt einen an dem Werkzeugträgerschlitten 24 befestigten ersten Hydraulikzylinder 28 und einen an dem Funktionsträgerschlitten 26 befestigten zweiten Hydraulikzylinder 29, die beide den gleichen Innendurchmesser haben. Die dem ersten Hydraulikzylinder 28 zugeordnete Kolbenstange 3 ist in einem auf der Maschinenbasis 21 befestigten Lagerbock 31 verschiebbar gelagert. An dem Lagerbock 31 und an dem ersten Hydraulikzylinder 28 sind ein erstes und ein zweites Klemmelement 32 und 33 einer ersten und zweiten Kupplungseinheit angeordnet, die wechselweise betätigbar sind, so daß die Kolbenstange 30 entweder an dem Lagerbock 31 oder an dem ersten Hydraulikzylinder 28 festgelegt ist. Die dem zweiten Hydraulikzylinder 29 zugeordnete Kolbenstange 36 ist an dem Funktionsträgerschlitten 26 befestigt. Die durch den Kolben voneinander getrennten beiden Kammern des ersten Hydraulikzylinders 28 sind über zwei Leitungen 34, 35 mit den beiden Kammern des zweiten Hydraulikzylinders 29 verbunden.

Im Betrieb der Werkzeugmaschine ist das zweite Klemmelement 33 deaktiviert, d. h. in den Trennzustand der zweiten Kupplungseinheit geschaltet, wogegen das erste Klemmelement 32 aktiviert, d. h. in den Verbindungszustand der ersten Kupplungseinheit geschaltet ist, so daß die Kolbenstange 30 an dem Lagerbock 31 und damit an der Basis 21 festgelegt ist, jedoch relativ zu dem ersten Hydraulikzylinder 28 frei bewegbar ist. Wenn sich der Werkzeugträgerschlitten 24 bei einer Vorschubbewegung nach rechts bewegt, dann vergrößert sich die rechte Kammer 37 des ersten Hydraulikzylinders 28, während sich seine linke Kammer 38 verkleinert. Dies hat zur Folge, daß Hydraulikflüssigkeit über die erste Leitung 34 in die rechte Kammer 39 des zweiten Hydraulikzylinders 29 gedrückt wird, während Hydraulikflüssigkeit aus der linken Kammer des Hydraulikzylinders 29 über die zweite Leitung 35 in die rechte Kammer 37 des Hydraulikzylinders 28 gedrückt wird. Da die Hydraulikflüssigkeit inkompressibel ist, sind die bei der Bewegung des Werkzeugträgerschlittens 24 aus den beiden Hydraulikzylindern 28 und 29 verdrängten Flüssigkeitsmengen identisch. Nachdem die beiden Hydraulikzylinder 28 und 29 den gleichen Durchmesser haben, sind auch die Bewegungshübe der Kolben in den beiden Hydraulikzylindern 28, 29 gleich groß. Bei der gezeigten Anordnung hat dies zur Folge, daß die Bewegungshübe des Werkzeugträgerschlittens 24 und des Funktionsträgerschlittens 26 gleich groß, aber zueinander entgegengesetzt sind. Dies bedeutet, daß der Funktionsträgerschlitten 26 und damit die Funktionseinheit 27 bei einer Bewegung des Werkzeugträgerschlittens 24 nach rechts ihre Lage relativ zur Basis 21 und damit zum Werkstück 23 nicht verändern. Wenn der Werkzeugträgerschlitten 24 nach links bewegt wird, dann wird Hydraulikflüssigkeit aus dem ersten Hydraulikzylinder 28 durch die zweite Leitung 35 ausgestoßen und durch die erste Leitung 34 angesaugt. Der Funktionsträgerschlitten 26 wird demzufolge gegenüber dem Werkzeugträgerschlitten 24 gleich weit nach rechts bewegt, so daß er seine Position relativ zur Basis 21 nicht verändert.

Wie dies vorstehend erläutert wurde, dient die hydraulische Kopplung des Funktionsträgerschlittens 26 mit dem Werkzeugträgerschlitten 24 dazu, eine vorgegebene Relativstellung zwischen der Funktionseinheit 27 und dem Werkstück 23 unabhängig von der Bewegung des Werkzeugträgerschlittens 24 beizubehalten. Wenn das zu bearbeitende Werkstück 23 gegen ein solches mit anderen Abmessungen ausgetauscht wird, dann kann es erforderlich sein, die Lage der Funktionseinheit 27, beispielsweise einer Kühlmitteldüse, relativ zum Werkstück 23 neu festzulegen. Zu diesem Zweck wird das zweite Klemmelement 33 geschlossen, so daß die Kolbenstange 30 mit dem ersten Hydraulikzylinder 28 starr verbunden ist, wogegen das erste Klemmelement 33 geöffnet wird, so daß die Kolbenstange 30 gegenüber dem Lagerbock 31 frei beweglich ist. Sodann wird der Werkzeugträgerschlitten 24 mittels der diesem zugeordneten Bewegungseinheit verfahren. Da die Kolbenstange 30 mit dem ersten Hydraulikzylinder 28 starr verbunden ist, ändert sich das Volumen seiner beiden Kammern nicht, so daß ein Austausch von Hydraulikflüssigkeit zwischen dem ersten und dem zweiten Hydraulikzylinder 28, 29 unterbleibt. Die hydraulische Kopplung bewirkt in diesem Fall, daß der Funktionsträgerschlitten 26 gemeinsam mit dem Werkzeugträgerschlitten 24 bewegt wird. Die sehr genau arbeitende erste Bewegungseinheit des Werkzeugträgerschlittens 24 kann daher benutzt werden, um den Funktionsträgerschlitten 26 und damit die Funktionseinheit 27 in die den Abmessungen des ausgetauschten Werkstücks 23 erforderliche Position zu bringen. Nach Abschluß des Positioniervorgangs wird das zweite Klemmelement 33 wieder geöffnet, wogegen das erste Klemmelement 32 geschlossen wird. Die hydraulische Kopplung wirkt dann wieder so, daß die Bewegungshübe des Werkzeugträgerschlittens 24 und des Funktionsträgerschlittens 26 zueinander entgegengesetzt, aber gleich groß sind.

Abweichend von dem vorstehend beschriebenen Ausführungsbeispiel könnten die Innendurchmesser des ersten und zweiten Hydraulikzylinders 28 und 29 auch verschieden sein. In diesem Fall wäre auch die Relativbewegung zwischen dem ersten Hydraulikzylinder 28 und der diesem zugeordneten Kolbenstange 30 und zwischen dem zweiten Hydraulikzylinder 29 und der diesem zugeordneten Kolbenstange 36 verschieden. Damit die Bewegungshübe der beiden Schlitten 24 und 26 trotz der unterschiedlichen Bewegungshübe der Kolbenstangen 30 und 36 gleich bleiben, ist es in diesem Fall erforderlich, die dem zweiten Hydraulikzylinder 29 zugeordnete Kolbenstange 36 über ein Getriebe mit dem Funktionsträgerschlitten 26 zu kuppeln. Dieses Getriebe könnte beispielsweise ein Zahnradgetriebe sein.

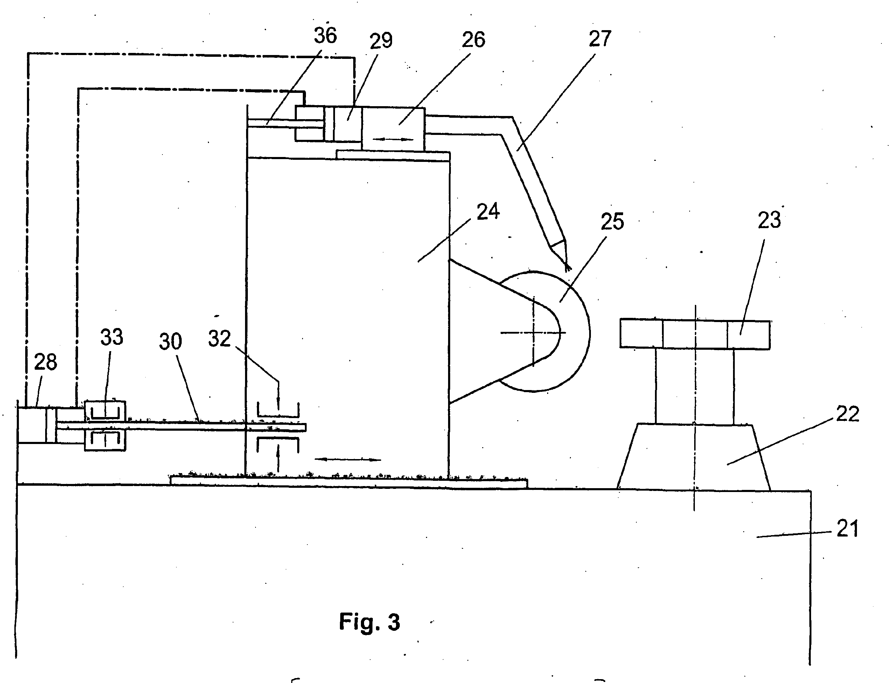

Die in Figur 3 gezeigte Ausführungsform einer Werkzeugmaschine unterscheidet sich von der in Fig. 2 beschriebenen Ausführungsform dadurch, daß der erste Hydraulikzylinder 28 an der Basis 21 befestigt ist und die erste Kolbenstange 30 mittels des Klemmelements 32 mit dem Werkzeugträgerschlitten 24 kuppelbar ist, wogegen der zweite Hydraulikzylinder 29 am Funktionsträgerschlitten 26 und die zweite Kolbenstange 36 am Werkzeugträgerschlitten 24 befestigt ist. Auch bei dieser Ausbildung der hydraulischen Kopplung des Werkzeugträgerschlittens 24 mit dem Funktionsträgerschlitten 26 ist gewährleistet, daß eine vorgegebene Relativstellung zwischen der Funktionseinheit 27 und der Basis 21 unabhängig von der Bewegung des Werkzeugträgerschlittens 24 beibehalten wird. Eine Änderung der Relativstellung zwischen der Funktionseinheit 27 und der Basis 21 zur Anpassung an das zu bearbeitende Werkstück 23 kann in der gleichen Weise durchgeführt werden wie bei der Ausführungsform nach Fig. 2.

### Verzeichnis der Bezugszeichen

- 1: erste Funktionsträgereinheit/Schlitten
- 2: Achse
- 3: Bearbeitungswerkzeug
- 4: Mantelfläche
- 5: Befestigungsabschnitt
- 6: Kühlmitteldüse
- 7: Achse
- 8: Teil
- 9: Tragarm
- 10: Achse
- 11: zweite Funktionsträgereinheit/Schlitten
- 11a: Lagerblock
- 12: starrer Stab
- 13: erste Kupplungseinheit
- 14: zweite Kupplungseinheit
- 15: Verbindungsteil
- 16: Gehäuse
- 21: Maschinenbasis
- 22: Werkstückträger
- 23: Werkstück
- 24: Werkzeugträgerschlitten
- 25: Werkzeug
- 26: Funktionsträgerschlitten
- 27: Funktionseinheit
- 28: erster Hydraulikzylinder
- 29: zweiter Hydraulikzylinder
- 30: Kolbenstange
- 31: Lagerbock
- 32: erste Klemmeinrichtung
- 33: zweite Klemmeinrichtung
- 34, 35: Leitungen
- 36: Kolbenstange
- 37: rechte Kammer
- 38: linke Kammer
- 39: rechte Kammer
- 40: linke Kammer
- 50: Ritzel
- 51: Zahnstange
- 52: Welle
- 53: unteres Ritzel
- 54: Zahnstangenbereich

## Patentansprüche

1. Werkzeugmaschine mit einer Maschinenbasis, einer ersten und einer zweiten Bewegungsachse (2, 7), einer ersten Funktionsträgereinheit (1; 24), die von einer von einem gesteuerten Antriebsmotor angetriebenen ersten Bewegungseinheit gemäß einem der ersten Bewegungsachse (2) entsprechenden ersten Bewegungsweg relativ zur Maschinenbasis bewegbar ist, und einer zweiten Funktionsträgereinheit (5; 26), die von einer zweiten Bewegungseinheit gemäß einem der zweiten Bewegungsachse (7) entsprechenden zweiten Bewegungsweg bewegbar ist, wobei die erste Bewegungsachse (2) eine Linearbewegungsachse ist und die zweite Bewegungseinheit eine zwischen einem Verbindungszustand und einem Trennzustand schaltbare erste Kupplungseinheit (13; 32), einen im Verbindungszustand der ersten Kupplungseinheit (13; 32) durch die Bewegung der ersten Funktionsträgereinheit (1; 24) längs eines deren erstem Bewegungsweg entsprechenden Bewegungswegs antreibbaren Antriebsabschnitt und einen von dem Antriebsabschnitt angetriebenen Abtriebsabschnitt aufweist, durch den die zweite Funktionsträgereinheit (5; 26) längs ihres zweiten Bewegungsweges angetrieben ist, **dadurch gekennzeichnet, daß** der Antriebsabschnitt und der Abtriebsabschnitt der zweiten Bewegungseinrichtung axial voneinander beabstandete Abschnitte eines sich mit seiner Längsachse parallel zur Linearbewegungsachse (2) erstreckenden starren Stabes (12) sind.

2. Werkzeugmaschine nach Anspruch 1, **dadurch gekennzeichnet, daß** die zweite Bewegungseinheit eine zweite Kupplungseinheit (14; 33) aufweist, die gegenläufig zu der ersten Kupplungseinheit (13; 32) zwischen einem Verbindungszustand, in dem die zweite Bewegungseinheit gesperrt ist, und einem Trennzustand, in dem die zweite Bewegungseinheit zum Antrieb freigegeben ist, schaltbar ist.

3. Werkzeugmaschine nach Anspruch 1 oder 2, **dadurch gekennzeichnet, daß** die erste Kupplungseinheit (13) ein Klemmelement aufweist, an dem der den Antriebsabschnitt bildende Abschnitt des Stabes (12) im Verbindungszustand der ersten Kupplungseinheit (13) festklemmbar ist.

4. Werkzeugmaschine nach Anspruch 3, **dadurch gekennzeichnet, daß** die erste Kupplungseinheit (13) an der ersten Funktionsträgereinheit (1) festgelegt ist.

5. Werkzeugmaschine nach Anspruch 2 und einem der Ansprüche 3 oder 4, **dadurch gekennzeichnet, daß** die zweite Kupplungseinheit (14) ein Klemmelement aufweist, an dem der den Abtriebsabschnitt bildende Abschnitt des Stabes (12) im Verbindungszustand der zweiten Kupplungseinheit (14) festklemmbar ist.

6. Werkzeugmaschine nach Anspruch 5, **dadurch gekennzeichnet, daß** die zweite Kupplungseinheit (14) an der Maschinenbasis festgelegt ist.

7. Werkzeugmaschine mit einer Maschinenbasis, einer ersten und einer zweiten Bewegungsachse (2, 7), einer ersten Funktionsträgereinheit (1; 24), die von einer von einem gesteuerten Antriebsmotor angetriebenen ersten Bewegungseinheit gemäß einem der ersten Bewegungsachse (2) entsprechenden ersten Bewegungsweg relativ zur Maschinenbasis bewegbar ist, und einer zweiten Funktionsträgereinheit (5; 26), die von einer zweiten Bewegungseinheit gemäß einem der zweiten Bewegungsachse (7) entsprechenden zweiten Bewegungsweg bewegbar ist, wobei die erste Bewegungsachse (2) eine Linearbewegungsachse ist und die zweite Bewegungseinheit eine zwischen einem Verbindungszustand und einem Trennzustand schaltbare erste Kupplungseinheit (13; 32), einen im Verbindungszustand der ersten Kupplungseinheit (13; 32) durch die Bewegung der ersten Funktionsträgereinheit (1; 24) längs eines deren erstem Bewegungsweg entsprechenden Bewegungswegs antreibbaren Antriebsabschnitt und einen von dem Antriebsabschnitt angetriebenen Abtriebsabschnitt aufweist, durch den die zweite Funktionsträgereinheit (5; 26) längs ihres zweiten Bewegungsweges angetrieben ist, **dadurch gekennzeichnet, daß** der Antriebsabschnitt und der Abtriebsabschnitt der zweiten Bewegungseinrichtung durch je eine druckmittelbetätigte Kolben-Zylinder-Einheit gebildet sind, aus deren Zylinder (28, 29) jeweils eine mit dem Kolben verbundene Kolbenstange (30, 36) herausragt und deren von dem jeweiligen Kolben in dem jeweiligen Zylinder voneinander getrennte Kammern jeweils durch sich zwischen den beiden Kolben-Zylinder-Einheiten erstreckende Druckmittelleitungen (34, 35) miteinander verbunden sind, und daß sich die Kolbenstange (30) der den Antriebsabschnitt bildenden Kolben-Zylinder-Einheit parallel zur Linearbewegungsachse erstreckt.

8. Werkzeugmaschine nach Anspruch 7, **dadurch gekennzeichnet, daß** das die Kolben-Zylinder-Einheiten betätigende Druckmittel ein hydraulisches Druckmittel ist.

9. Werkzeugmaschine nach einem der Ansprüche 7 oder 8, **dadurch gekennzeichnet, daß** die erste Kupplungseinheit (32) ein Klemmelement aufweist, an dem die Kolbenstange (30) der den Antriebsabschnitt bildenden Kolben-Zylinder-Einheit im Verbindungszustand der ersten Kupplungseinheit (32) festklemmbar ist.

10. Werkzeugmaschine nach Anspruch 9, **dadurch gekennzeichnet, daß** die den Antriebsabschnitt bildende Kolben-Zylinder-Einheit an der ersten Funktionsträgereinheit (24) und die erste Kupplungseinheit (32) an der Maschinenbasis (21) festgelegt ist.

11. Werkzeugmaschine nach Anspruch 9, **dadurch gekennzeichnet, daß** die den Antriebsabschnitt bildende Kolben-Zylinder-Einheit an der Maschinenbasis (21) und die erste Kupplungseinheit (32) an der ersten Funktionsträgereinheit (24) festgelegt ist.

12. Werkzeugmaschine nach Anspruch 2 und einem der Ansprüche 7 bis 11, **dadurch gekennzeichnet, daß** die zweite Kupplungseinheit (33) ein Klemmelement aufweist, an dem die Kolbenstange (30) der den Antriebsabschnitt bildenden Kolben-Zylinder-Einheit im Verbindungszustand der zweiten Kupplungseinheit (33) festklemmbar ist.

13. Werkzeugmaschine nach Anspruch 12, **dadurch gekennzeichnet, daß** die zweite Kupplungseinheit (33) an dem Zylinder (28) der den Antriebsabschnitt bildenden Kolben-Zylinder-Einheit festgelegt ist.

14. Werkzeugmaschine nach einem der Ansprüche 7 bis 13, **dadurch gekennzeichnet, daß** die Zylinder (28, 29) der den Antriebsabschnitt und den Abtriebsabschnitt bildenden Kolben-Zylinder-Einheit den gleichen Innenquerschnitt aufweisen.

15. Werkzeugmaschine nach einem der Ansprüche 1 bis 14, **dadurch gekennzeichnet, daß** die zweite Bewegungsachse (10) eine Linearbewegungsachse ist.

16. Werkzeugmaschine nach einem der Ansprüche 1 bis 14, **dadurch gekennzeichnet, daß** die zweite Bewegungsachse (7) eine Drehbewegungsachse ist.

17. Werkzeugmaschine nach einem der Ansprüche 1 bis 16, **dadurch gekennzeichnet, daß** zwischen der zweiten Funktionsträgereinheit (5) und dem Abtriebsabschnitt ein dessen Bewegungsrichtung oder dessen Bewegungsweg änderndes Getriebe vorgesehen ist.

18. Werkzeugmaschine nach einem der Ansprüche 1 bis 17, **dadurch gekennzeichnet, daß** an der ersten Funktionsträgereinheit (1; 24) ein Bearbeitungswerkzeug (3; 25) und an der zweiten Funktionsträgereinheit (5; 26) eine Kühlmitteldüse (6; 27) angeordnet ist.

19. Werkzeugmaschine nach einem der Ansprüche 1 bis 18, **dadurch gekennzeichnet, daß** die erste Funktionsträgereinheit ein auf der Maschinenbasis (21) verschiebbar gelagerter erster Schlitten (24) ist.

20. Werkzeugmaschine nach einem der Ansprüche 1 bis 19, **dadurch gekennzeichnet, daß** die zweite Funktionsträgereinheit ein auf der ersten Funktionsträgereinheit (24) verschiebbar gelagerter zweiter Schlitten (26) ist.

## Claims

1. A machine tool with a machine base, a first and a second movement axis (2, 7), a first function carrier unit (1; 24) which is moveable by a first movement unit driven by a controlled drive motor according to a first movement path corresponding to the first movement axis (2) relative to the machine base, and a second function carrier unit (5; 26) which is moveable by a second movement unit according to a second movement path corresponding to the second movement axis (7), the first movement axis (2) being a linear movement axis, and the second movement unit having a first coupling unit (13; 32) switchable between a connection state and a separation state, a drive section that can be driven in the connection state of the first coupling unit (13; 32) by the movement of the first function carrier unit (1; 24) along a movement path corresponding to the first movement path of the latter, and an output section driven by the drive section by means of which the second function carrier unit (5; 26) is driven along its second movement path, **characterised in that** the drive section and the output section of the second movement device are sections, spaced apart from one another axially, of a rigid bar (12) extending with its longitudinal axis parallel to the linear movement axis (2).

2. The machine tool according to Claim 1, **characterised in that** the second movement unit has a second coupling unit (14; 33) which can be switched in the opposite direction to the first coupling unit (13;32) between a connection state, in which the second movement unit is locked, and a separation state in which the second movement unit is released for drive.

3. The machine tool according to Claim 1 or 2, **characterised in that** the first coupling unit (13) has a clamping element on which the section of the bar (12) forming the drive section in the connection state of the first coupling unit (13) can be securely clamped.

4. The machine tool according to Claim 3, **characterised in that** the first coupling unit (13) is fixed onto the first function carrier unit (1).

5. The machine tool according to Claim 2 and either of Claims 3 or 4, **characterised in that** the second coupling unit (14) has a clamping element onto which the section of the bar (12) forming the output section in the connection state of the second coupling unit (14) can be securely clamped.

6. The machine tool according to Claim 5, **characterised in that** the second coupling unit (14) is fixed onto the machine base.

7. The machine tool with a machine base, a first and a second movement axis (2, 7), a first function carrier unit (1; 24) which is moveable by a first movement unit driven by a controlled drive motor according to a first movement path corresponding to the first movement axis (2) relative to the machine base, and a second function carrier unit (5; 26) which is moveable by a second movement unit according to a second movement path corresponding to the second movement axis (7), the first movement axis (2) being a linear movement axis, and the second movement unit a first coupling unit (13; 32) switchable between a connection state and a separation state, a drive section that can be driven in the connection state of the first coupling unit (13; 32) by the movement of the first function carrier unit (1; 24) along a movement path corresponding to the first movement path of the latter, and an output section driven by the drive section by means of which the second function carrier unit (5; 26) is driven along its second movement path, **characterised in that** the drive section and the output section of the second movement device are formed respectively by a pressurising medium-operated piston/cylinder unit from the cylinders (28, 29) of which a piston rod (30, 36) connected to the piston respectively projects, and the chambers of which, separated from one another in the respective cylinder of the respective piston, are respectively connected to one another by pressurising medium lines (34, 35) extending between the two piston/cylinder units, and that the piston rod (30) of the piston/cylinder unit forming the drive section extends parallel to the linear movement axis.

8. The machine tool according to Claim 7, **characterised in that** the pressurising medium operating the piston/cylinder units is a hydraulic pressurising medium.

9. The machine tool according to either of Claims 7 or 8, **characterised in that** the first coupling unit (32) has a clamping element to which the piston rod (30) of the piston/cylinder unit forming the drive section can be securely clamped in the connection state of the first coupling unit (32).

10. The machine tool according to Claim 9, **characterised in that** the piston/cylinder unit forming the drive section is fixed onto the first function carrier unit (24) and the first coupling unit (32) onto the machine base (21).

11. The machine tool according to claim 9, **characterised in that** the piston/cylinder unit forming the drive section is fixed onto the machine base (21) and the first coupling unit (32) is fixed onto the first function carrier unit (24).

12. The machine tool according to Claim 2 and any of Claims 7 to 11, **characterised in that** the second coupling unit (33) has a clamping element onto which the piston rod (30) of the piston/cylinder unit forming the drive section in the connection state of the second coupling unit (33) can be securely clamped.

13. The machine tool according to Claim 12, **characterised in that** the second coupling unit (33) is fixed onto the cylinder (28) of the piston/cylinder unit forming the drive section.

14. The machine tool according to any of Claims 7 to 13, **characterised in that** the cylinders (28, 29) of the piston/cylinder unit forming the drive section and the output section have the same inner cross-section.

15. The machine tool according to any of Claims 1 to 14, **characterised in that** the second movement axis (10) is a linear movement axis.

16. The machine tool according to any of Claims 1 to 14, **characterised in that** the second movement axis (7) is a rotational movement axis.

17. The machine tool according to any of Claims 1 to 16, **characterised in that** between the second function carrier unit (5) and the output section a transmission changing the movement direction of the latter or the movement path of the latter is provided.

18. The machine tool according to any of Claims 1 to 17, **characterised in that** a processing tool (3; 25) is disposed on the first function carrier unit (1; 24) and a coolant nozzle (6; 27) is disposed on the second function carrier unit (5; 26).

19. The machine tool according to any of Claims 1 to 18, **characterised in that** the first function carrier unit is a first carriage moveably mounted on the machine base (21).

20. The machine tool according to any of Claims 1 to 19, **characterised in that** the second function carrier unit is a second carriage (26) moveably mounted on the first function carrier unit (24).

## Revendications

1. Machine-outil comportant une base de machine, un premier et un deuxième axe de déplacement (2, 7), une première unité porte-fonction (1 ; 24) qui est mobile par rapport à la base de la machine suivant une première voie de déplacement correspondant au premier axe de déplacement (2) à partir d'une première unité de déplacement entraînée par un moteur d'entraînement commandé, et une deuxième unité porte-fonction (5 ; 26) qui est mobile suivant une deuxième voie de déplacement correspondant au deuxième axe de déplacement (7) à partir d'une deuxième unité de déplacement, le premier axe de déplacement (2) étant un axe de déplacement linéaire et la deuxième unité de déplacement présentant une première unité de couplage (13 ; 32) susceptible de passer d'un état d'accouplement à un état de désaccouplement, une partie d'entraînement entraînée, lorsque la première unité de couplage (13 ; 32) est à l'état d'accouplement, par le déplacement de la première unité porte-fonction (1 ; 24) le long d'une voie de déplacement correspondant à sa première voie de déplacement, et une partie de sortie qui est entraînée par la partie d'entraînement et qui entraîne la deuxième unité porte-fonction (5 ; 26) le long de sa deuxième voie de déplacement, **caractérisée en ce que** la partie d'entraînement et la partie de sortie de la deuxième installation de déplacement sont des sections, espacées axialement l'une de l'autre, d'une tige rigide (12) qui se prolonge par son axe longitudinal parallèlement à l'axe de déplacement linéaire (2).

2. Machine-outil selon la revendication 1, **caractérisée en ce que** la deuxième unité de déplacement présente une deuxième unité de couplage (14 ; 33), qui est susceptible de passer, à l'opposé de la première unité de couplage (13 ; 32), d'un état d'accouplement, dans lequel la deuxième unité de déplacement est verrouillée, à un état de désaccouplement dans lequel la deuxième unité de déplacement est libérée en vue de son entraînement.

3. Machine-outil selon la revendication 1 ou 2, **caractérisée en ce que** la première unité de couplage (13) présente un élément de serrage au niveau duquel la partie de la tige (12) constituant la partie d'entraînement est susceptible d'être bloquée lorsque la première unité de couplage (13) se trouve dans l'état d'accouplement.

4. Machine-outil selon la revendication 3, **caractérisée en ce que** la première unité de couplage (13) est fixée à la première unité porte-fonction (1).

5. Machine-outil selon la revendication 2 et l'une des revendications 3 ou 4, **caractérisée en ce que** la deuxième unité de couplage (14) présente un élément de serrage au niveau duquel la partie de la tige (12) constituant la partie de sortie est susceptible d'être bloquée lorsque la deuxième unité de couplage (14) se trouve dans l'état d'accouplement.

6. Machine-outil selon la revendication 5, **caractérisée en ce que** la deuxième unité de couplage (14) est fixée à la base de la machine.

7. Machine-outil comportant une base de machine, un premier et un deuxième axe de déplacement (2, 7), une première unité porte-fonction (1 ; 24) qui est mobile par rapport à la base de la machine suivant une première voie de déplacement correspondant au premier axe de déplacement (2) à partir d'une première unité de déplacement entraînée par un moteur d'entraînement commandé, et une deuxième unité porte-fonction (5 ; 26) qui est mobile suivant une deuxième voie de déplacement correspondant au deuxième axe de déplacement (7) à partir d'une deuxième unité de déplacement, le premier axe de déplacement (2) étant un axe de déplacement linéaire et la deuxième unité de déplacement présentant une première unité de couplage (13 ; 32) susceptible de passer d'un état d'accouplement à un état de désaccouplement, une partie d'entraînement entraînée, lorsque la première unité de couplage (13 ; 32) est à l'état d'accouplement, par le déplacement de la première unité porte-fonction (1 ; 24) le long d'une voie de déplacement correspondant à sa première voie de déplacement, et une partie de sortie qui est entraînée par la partie d'entraînement et qui entraîne la deuxième unité porte-fonction (5 ; 26) le long de sa deuxième voie de déplacement, **caractérisée en ce que** la partie d'entraînement et la partie de sortie de la deuxième installation de déplacement sont chacune constituées par une unité piston-cylindre actionnée par un agent de pression, dont le cylindre (28, 29) présente respectivement une tige de piston (30, 36) qui en fait saillie en étant reliée au piston, et dont les chambres séparées par le piston respectif du cylindre respectif sont reliées respectivement par des conduites pour agent de pression (34, 35) qui se prolongent entre les deux unités piston-cylindre, et **en ce que** la tige de piston (30) de l'unité piston-cylindre constituant la partie d'entraînement se prolonge parallèlement à l'axe de déplacement linéaire.

8. Machine-outil selon la revendication 7, **caractérisée en ce que** l'agent de pression actionnant les unités piston-cylindre est un agent de pression hydraulique.

9. Machine-outil selon l'une des revendications 7 ou 8, **caractérisée en ce que** la première unité de couplage (32) présente un élément de serrage au niveau duquel la tige de piston (30) de l'unité piston-cylindre constituant la partie d'entraînement est susceptible d'être bloquée lorsque la première unité de couplage (32) se trouve dans l'état d'accouplement.

10. Machine-outil selon la revendication 9, **caractérisée en ce que** l'unité piston-cylindre constituant la partie d'entraînement est fixée à la première unité porte-fonction (24) et la première unité de couplage (32) est fixée à la base de la machine (21).

11. Machine-outil selon la revendication 9, **caractérisée en ce que** l'unité piston-cylindre constituant la partie d'entraînement est fixée à la base de la machine (21) et la première unité de couplage (32) est fixée à la première unité porte-fonction (24).

12. Machine-outil selon la revendication 2 et l'une des revendications 7 à 11, **caractérisée en ce que** la deuxième unité de couplage (33) présente un élément de serrage au niveau duquel la tige de piston (30) de l'unité piston-cylindre constituant la partie d'entraînement est susceptible d'être bloquée lorsque la deuxième unité de couplage (33) se trouve dans l'état d'accouplement.

13. Machine-outil selon la revendication 12, **caractérisée en ce que** la deuxième unité de couplage (33) est fixée au cylindre (28) de l'unité piston-cylindre constituant la partie d'entraînement.

14. Machine-outil selon l'une des revendications 7 à 13, **caractérisée en ce que** les cylindres (28, 29) de l'unité piston-cylindre constituant la partie d'entraînement et la partie de sortie présentent la même section intérieure.

15. Machine-outil selon l'une des revendications 1 à 14, **caractérisée en ce que** le deuxième axe de déplacement (10) est un axe de déplacement linéaire.

16. Machine-outil selon l'une des revendications 1 à 14, **caractérisée en ce que** le deuxième axe de déplacement (7) est un axe de rotation.

17. Machine-outil selon l'une des revendications 1 à 16, **caractérisée en ce qu'**il est prévu, entre la deuxième unité porte-fonction (5) et la partie de sortie, un engrenage changeant de sens de déplacement ou de voie de déplacement.

18. Machine-outil selon l'une des revendications 1 à 17, **caractérisée en ce qu'**un outil d'usinage (3 ; 25) est monté sur la première unité porte-fonction (1 ; 24) et une buse pour fluide de refroidissement (6 ; 27) est montée sur la deuxième unité porte-fonction (5 ; 26).

19. Machine-outil selon l'une des revendications 1 à 18, **caractérisée en ce que** la première unité porte-fonction consiste en un premier chariot (24) monté déplaçable sur la base de la machine (21).

20. Machine-outil selon l'une des revendications 1 à 19, **caractérisée en ce que** la deuxième unité porte-fonction consiste en un deuxième chariot (26) monté déplaçable sur la première unité porte-fonction (24).
